# EUROPEAN PATENT APPLICATION

(11) **EP 4 506 966 A1**
(43) Date of publication of application: **12.02.2025**
(21) Application number: 23190615.7
(22) Date of filing: 09.08.2023
(51) Int. Cl.: H01B 7/42, B60L 53/18, H01B 7/28

(54) **EV CHARGING CABLE WITH ENHANCED RESISTANCE TO HEAT**

(71) Applicant: ABB E-mobility B.V., 2629 JG Delft (NL)
(72) Inventor: FONDELLI, Tommaso, 50063 Firenze (IT); GARCIA-FERRE, Francisco, 5400 Baden (CH); BECH, Lars Peter, 3119 JA Schiedam (NL); UGUR, Ali, 2545 XP Den Haag (NL)
(74) Representative: Zimmermann & Partner Patentanwälte mbB

(57) **Abstract**

A charging cable for an electric vehicle and an electric vehicle charging system are described herein. The charging cable includes a plurality of power wires extending in an axial direction and configured for conducting direct current, and a cable sheath surrounding the plurality of power wires. The cable sheath includes a sheath portion touchable by a human hand. The sheath portion of the cable sheath includes a passive radiative cooling material.

## Description

### TECHNICAL FIELD

Embodiments of the present disclosure relate to a charging cable for an electric vehicle and an electric vehicle charging system.

### BACKGROUND

When using an electric vehicle (EV) charging system to connect its charging connector to a charger socket of an electric vehicle, a user typically has to touch or grasp a part of the charging cable of the EV charging system.

There are limitations to the maximum temperature that EV charging cables and connectors should reach. The temperature at the electrical contacts should not exceed an increase of 50 °C compared to ambient temperature upon charging and should not exceed 90 °C in any case. This is indicated, for instance, in standard IEC 62196 series or in standard LTL 2251. In addition, the temperature of graspable plastic parts should not exceed the limits indicated in standard IEC:2010 guide 117.

The charging cable itself is a touchable part, and does not need to be grasped for many applications. If the charging cable is long, for example at least 5m, a user may need to grasp the charging cable for the purpose of connecting or disconnecting the EV charging system.

In order to keep temperatures below such limits, prior art charging cables are designed such that the maximum current that an EV charging cable can actually deliver is limited. For example, copper cables with a topology of 2×50mm² Cu conductors per DC pole and 1×25 mm² ground conductor are used, which results in a nominal rating of 300A or 350A. In other words, large diameter copper wires are used to keep the temperature of the cables low enough. This increases the costs for manufacturing and the weight, and therefore is inconvenient for users to handle. The charging cable may have a weight of more than 3 kg/m, considering all plastic insulation and signal conductors.

Furthermore, in case of high ambient temperatures, for example above 30 °C, or in case the charging cable is exposed to direct sunlight, the plastic part of the cable sheath may exceed the aforementioned temperatures. The temperature of the outer surface of such prior art cables may exceed 70 °C, leaving few seconds of contact before the user enters a burn threshold region.

Some prior art charging cables include cooling means based on forced convection of a liquid coolant. However, this entails utilizing a cooling unit and a more advanced cable technology, which is comparatively expensive, complex to implement, and potentially requires laborious maintenance.

There is a continuous demand for improved charging cables for electric vehicles. There is a need for charging cables which allow to achieve high charge currents for long periods of time, without the need for cooling units and liquid cooled cables, while having an acceptable outer surface temperature suitable for being touched or grasped by a user.

### SUMMARY

In light of the above, a charging cable for an electric vehicle according to independent claim 1 and an electric vehicle charging system according to claim 15 is provided. Further aspects, advantages, and features are apparent from the dependent claims, the description, and the accompanying drawings.

According to an aspect of the present disclosure, a charging cable for an electric vehicle is provided. The charging cable includes a plurality of power wires extending in an axial direction and configured for conducting direct current, and a cable sheath surrounding the plurality of power wires. The cable sheath includes a sheath portion touchable by a human hand, in particular graspable by a human hand. The sheath portion of the cable sheath includes a passive radiative cooling material. The passive radiative cooling material has a solar radiation reflectivity of at least 0.6, preferably of at least 0.8, more preferably of at least 0.9 and most preferably of at least 0.95. Additionally, or alternatively, the passive radiative cooling material has an atmospheric window emittance of at least 0.6, preferably of at least 0.8, more preferably of at least 0.9, and most preferably of at least 0.96.

The plurality of power wires may be configured for conducting positive and/or negative direct current. In one implementation, the charging cable may have two power wires for conducting positive and two power wires for conducting negative direct current. For example, the charging cable may have 4×50mm² copper power wires. Additionally, the charging cable may include a ground conductor, for example 1x25 mm² copper ground conductor. However, the charging cable may also have any other number of power wires, and any other diameter power wires suitable for electrical vehicle charging cables. The charging cable may have a nominal rating of at least 500 A.

Each of the plurality of power wires may include a power conductor and a power wire insulation surrounding the power conductor. The ground conductor may include a ground insulation.

The cable sheath may extend longitudinally from a first end to a second end. The first end of the cable sheath may be attachable or may be attached to a charging connector configured for being connected to the electric vehicle. The second end of the cable sheath may be connected or connectable to an EV charging station of an electric vehicle charging system. The cable sheath may have an outer diameter of at least 35 mm, preferably of at least 40 mm, and more preferably of at least 42 mm.

The cable sheath may include an inner or interior surface in contact with the plurality of power wires. The cable sheath may include an outer or exterior surface. The exterior surface may substantially or entirely be directly exposed to ambient conditions, e.g. to air, to direct sunlight etc.. The cable sheath may include one or more layers as further described below. At least one of the layers, preferably all layers, of the cable sheath may be made of a plastic material. For instance, the cable sheath may be obtained by extrusion. The outer cable sheath is preferably made of a flexible material.

The sheath portion is preferably integrally formed with the cable sheath. The sheath portion may extend longitudinally. The sheath portion is at least long enough to be fully touched by a human hand, e.g. such as at least 10 cm, but can also be longer, such as at least 20 cm, at least 50 cm or even at least 100 cm. The sheath portion may also extend longitudinally from the first end to the second end. Typically, the sheath portion is arranged proximate the first end of the cable sheath. The sheath portion may be formed in a manner similar to the cable sheath, but can include further components not contained in the remaining parts of the cable sheath, e.g. to achieve an acceptable outer surface temperature for the sheath portion. The sheath portion may include one or more layers as further described below. At least one of the layers, preferably all layers, of the sheath portion may be made of a plastic material.

A sheath portion "touchable" by a human hand preferably means that during a charging cycle of the electric vehicle the sheath portion does not exceed an outer surface temperature of 85 °C. A sheath portion "graspable" by a human hand preferably means that during a charging cycle of the electric vehicle the sheath portion does not exceed an outer surface temperature of 60 °C.

The sheath portion includes the passive radiative cooling material. The cable sheath may even include the passive radiative cooling material from the first end to the second end. A passive radiative cooling material is to be understood as a material that is spectrally selective, namely in that the material is highly reflective in a short-wave band (between 250 nm and 2500 nm), is highly emissive within the atmospheric window (8 µm to 13 µm), and is weakly emissive outside the atmospheric window. The passive radiative cooling material typically has a substantially higher emission coefficient than a polymer used to form the cable sheath.

Preferably, the passive radiative cooling material has a solar radiation reflectivity of at least 0.8, preferably of at least 0.9, and more preferably of at least 0.95, and an atmospheric window emittance of at least 0.8, preferably of at least 0.9, and more preferably of at least 0.96. The term "solar radiation reflectivity" is to be understood as the reflectivity in the short-wave band, i.e. between 250 nm and 2500 nm. The term "atmospheric window emittance" is to be understood as the emittance in the wavelength range between 8 µm to 13 µm. Outside of the atmospheric window, the passive radiative cooling material may have an emittance of no more than 0.5, preferably of no more than 0.25, and more preferably of no more than 0.05. In the wavelength range between 250 nm and 2500 nm, the passive radiative cooling material may have an emittance of no more than 0.05 and preferably zero emittance to avoid the absorption of solar irradiance.

The charging cables described herein allow to make use of high currents during charging, such as at least 500 A, for long periods of time, such as at least 20 minutes, while still enabling the user to touch or even grasp the sheath portion of the charging cable. The charging cable disclosed herein may allow to use the same diameter copper wires as in prior art cables, or even use lower diameter power wires, in view of the passive radiative cooling material limiting the surface temperature of the sheath portion. Therefore, the charging cable has an acceptable weight per meter or may even have a lower weight than prior art charging cables, thereby facilitating handling of the charging cable by a user.

The passive radiative cooling material has high reflectivity in the short-wave band and therefore does not heat up as much as prior art cable sheaths in case of direct sunlight. Furthermore, the passive radiative cooling material is highly emissive in the atmospheric window. Therefore, the outer surface of the sheath portion can have sub-ambient temperatures when the charging cable is not used for charging. When the charging cable is used for charging the electric vehicle, the surface temperature of the sheath portion may be maintained below acceptable temperatures for touching or even grasping the sheath with a human hand. Beneficially, the charging cable described herein does not require any cooling unit or liquid cooled cables to maintain the outer surface of the sheath portion below acceptable temperatures. In a preferred embodiment, the charging cable does not include a liquid cooling system, e.g. does not include a cooling unit or a cooling liquid channel.

A temperature (compared to ambient temperature) increase of the outer surface of the sheath portion during charging of the electric vehicle may not exceed 50 °C, preferably may not exceed 40 °C, and even more preferably may not exceed 30 °C. The temperature of the outer surface of the sheath portion during charging may not exceed 85 °C, preferably may not exceed 60 °C, and more preferably may not exceed 50 °C.

According to an embodiment, the passive radiative cooling material has a radiative cooling power of at least 50 W/m², preferably at least 90 W/m², and more preferably at least 120 W/m². The radiative cooling power is defined at an ambient temperature of at least 20 °C, preferably at an ambient temperature of 20 °C. The cooling power is preferably measured during midday, and under a solar intensity of 900 W/m². The cooling power is preferably determined according to Raman, A., Anoma, M., Zhu, L. et al. Passive radiative cooling below ambient air temperature under direct sunlight. Nature 515, 540-544 (2014).

In one embodiment, the sheath portion is formed of a base material including a polymer and the passive radiative cooling material. In other words, the sheath portion may be essentially composed of the polymer and the passive radiative cooling material is embedded in the polymer. The polymer may be the same as a polymer used to form remaining portions of the cable sheath.

In another embodiment, the sheath portion includes an outer layer including the passive radiative cooling material. The sheath portion may further include an inner layer disposed within the outer layer. The inner layer may not include the passive radiative cooling material. The inner and outer layer may be integrally formed with each other, such as by coextrusion or by adhering the inner with the outer layer. An adhesive layer may be provided between the inner and outer layer. The inner layer may include a polymer. The polymer may be the same as a polymer used to form remaining portions of the cable sheath.

The outer layer may have a thickness of at least 500 µm, preferably at least 1000 µm. The passive radiative cooling material may be embedded in a polymeric material or matrix. The polymeric matrix may have pores or voids into which the passive radiative cooling material is disposed. For example, the pores may have a pore size in the range of 50-150 µm.

In one illustrative embodiment, the outer layer may be obtained by providing a coating or a paint on the inner layer, and optionally by curing the coating. The coating or paint may include the passive radiative cooling material, one or more solvents, one or more binders, and optionally additives. The binder may be a or may form a polymer, e.g. an acrylic material.

Alternatively, the outer layer may be provided as a film. The film may be wrapped around the inner layer. For example, the outer layer may be adhered to the inner layer with the adhesive layer or heat shrunk onto the inner layer. Typically, the film is formed of a polymeric material and includes the passive radiative cooling material.

The sheath portion may further include a weather resistant film disposed outside of the outer layer. For example, the weather resistant film may include an anti-ultraviolet additive, and/or an oxygen-impermeable additive. Additionally, or alternatively, the weather resistant film may include a moisture-resistant or even vapour-impermeable layer.

The passive radiative cooling material may include or be constituted of nanoparticles. The nanoparticles may have a nanoparticle size in the range of 100 to 500 nm.

The nanoparticles may include one or more selected from the group consisting of SiO₂ nanoparticles, TiO₂ nanoparticles, carbon black nanoparticles, metal oxide nanoparticles and mixtures thereof. For example, the nanoparticles may include a mixture of SiO₂ and TiO₂ nanoparticles, or a mixture of TiO₂ and carbon black nanoparticles.

In a preferred embodiment, the sheath portion includes an outer layer, wherein the outer layer may be obtained by providing a coating or a paint on the inner layer. The paint or coating may include the passive radiative cooling material as nanoparticles having a nanoparticle size in the range of 100 to 500 nm.

In a preferred embodiment, the sheath portion includes an outer layer provided as a film. The film may include a polymeric matrix having pores or voids with a pore size in the range of 50-150 µm. The passive radiative cooling material are nanoparticles having a nanoparticle size in the range of 100 to 500 nm, which are disposed in the pores or voids of the polymeric matrix.

In another preferred embodiment, the sheath portion is formed of a base material including a polymer and the passive radiative cooling material. The passive radiative cooling material are nanoparticles having a nanoparticle size in the range of 100 to 500 nm.

In another embodiment, the passive radiative cooling material includes photonic crystals. The photonic crystal may have a structure of periodic array of α-quartz bars, or the photonic crystal may have a structure comprising two layers of quartz and SiC.

According to an embodiment, the outer surface of the sheath portion, and preferably the entire cable sheath, may have a bright colour. An outer surface with a bright colour may allow to increase the reflectivity of the sheath portion, thereby decreasing the outer surface temperature of the sheath portion during a charging process. A colouring agent, such as a pigment, may be included in any component of the sheath portion, for example, in the base material, in the outer layer or in the weather resistant film. In one embodiment, the outer surface of the sheath portion, in particular the outer surface of the cable sheath, has a L* value of ≥ 50, particularly ≥ 60, more particularly ≥ 70, such as ≥ 80 or such as ≥ 90, according to the CIE L*a*b* system. A b* value may be >0, and preferably >50. The outer surface may preferably be yellow or orange, and preferably not white. White materials often become yellowish due to ageing, which to some users causes the perception of poor quality.

According to another embodiment, the sheath portion, and in particular the cable sheath, may have a reflective surface. A reflective outer surface may allow to increase the reflectivity of the sheath portion, thereby decreasing the outer surface temperature of the sheath portion during a charging process. The reflective surface is preferably provided on an outermost layer. The outermost layer may be any of the base material, the outer layer or the weather resistant film, or a separate reflective layer. The reflective surface may have reflectivity in the atmospheric window, and in particular the infrared range, of at least 50%.

The outermost layer of the sheath portion may preferably be shiny and/or have a smooth surface.

According to an embodiment, the cable sheath is an outer cable sheath. The charging cable further includes an inner cable sheath disposed within the outer cable sheath. The power wires and/or the ground conductor may be arranged within the inner cable sheath. Providing the charging cable with an inner and outer cable sheath may decrease the thermal coupling between the power wires and the outer surface of the outer cable sheath. This may facilitate in maintaining the surface temperature of the sheath portion may below acceptable temperatures for touching or even grasping the sheath with a human hand.

According to an embodiment, the sheath portion of the cable sheath includes a plurality of fins projecting radially outward. The fins are arranged on the outer surface of the cable sheath. The fins allow to augment the thermal performance of the charging cable by increasing the outer sheath heat transfer surface. The plurality of fins on the cable sheath facilitate heat dissipation of heat generated by the power wires. Therefore, the maximum temperature of the conductor decreases during the charging stage, and the cooling is accelerated. Advantageously, the hottest points of the outer surface of the sheath portion are in the "valleys" of the fins, while the coolest points are the tips of the fins, the graspable region.

The fins may be integrally formed with the cable sheath. For example, the cable sheath may be formed in an extrusion process. The fins may extend only within the sheath portion or may also extend outside the sheath portion. For example, the fins may extend substantially or entirely along the axial length of the cable sheath. Alternatively, the fins may extend substantially or entirely along a portion of the cable sheath that is configured to be directly exposed to air. For example, a portion of the cable sheath attached to a charging connector may not include the fins.

In one illustrative embodiment the plurality of fins is provided as annular fins. The term "annular" means that the fins predominantly have an annular character, but also relates to non-ideal cases. For example, the annular fins may extend in a spiral manner. Each 360° turn is considered as one fin so that a single spiralling fin may be regarded as a "plurality" of fins.

In another illustrative embodiment the plurality of fins is provided as radial fins. The term "radial" means that the fins predominantly have a radial character, but also relates to non-ideal cases. For example, the radial fins may be straight radial fins. In another example, the radial fins may be curved radial fins. The curved radial fins predominantly extend along the longitudinal axis, but can also have a slight curvature (annular component).

Other types of fins or corrugated shapes are also envisioned. For example, the plurality of fins may be pin fins or wave shaped fins.

The plurality of fins may be densely provided on the sheath portion, in particular the cable sheath. For example, a fin separation between adjacent fins may be at most 3 times, preferably at most 2 times, a fin width.

The fins may be coloured as described above. For example, the valleys of the fins may have a first colour (e.g. white), while the tips of the fins may not be coloured or coloured in a different second colour (e.g. yellow or orange).

According to another aspect of the present disclosure, an electric vehicle charging system is provided. The electric vehicle charging system includes the charging cable according to any embodiment described herein. The electric vehicle further includes a charging connector attached to an end of the charging cable and configured for being connected to the electric vehicle.

In one embodiment, the electric vehicle charging system may include a handle attached to the cable sheath. The handle is spaced apart from the charging connector. The handle is preferably disposed proximate the first end of the cable sheath and/or proximate the charging connector. Providing a handle may be particularly advantageous in case the charging cable is long (e.g. 5 m or more). In this case, it may difficult for the user to plug the connector into the electric vehicle without grasping the charging cable with one hand and the connector with the other hand.

Those skilled in the art will recognise additional features and advantages upon reading the following detailed description, and upon viewing the accompanying drawings.

### BRIEF DESCRIPTION OF THE DRAWINGS

The components in the Figures are not necessarily to scale, instead emphasis being placed upon illustrating the principles of the invention. Moreover, in the Figures, like reference signs designate corresponding parts. The accompanying drawings relate to embodiments of the disclosure and are described in the following:
- Fig. 1: shows a schematic view of a charging cable according to embodiments described herein;
- Fig. 2: shows a schematic view of a charging cable according to embodiments described herein;
- Fig. 3A: shows a schematic view of a charging cable with fins according to embodiments described herein;
- Fig. 3B: shows a schematic view of a charging cable with fins according to another embodiment described herein;
- Fig. 4: shows a schematic view of an electric vehicle charging system according to embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

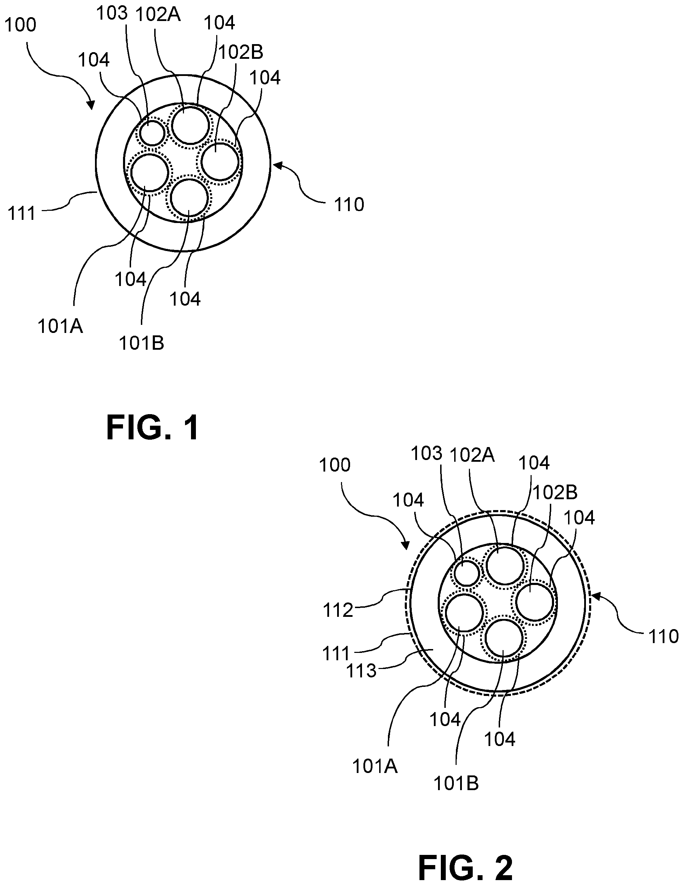

With exemplary reference to Fig. 1, a charging cable 100 is described. Figure 1 shows a cross-section of the charging cable within the sheath portion.

The charging cable 100 includes two power wires for conducting positive direct current 101A, 101B and two power wires for conducting negative direct current 102A, 102B. Each of the power wires includes a power conductor, e.g. made of copper, and a power wire insulation 104.

The charging cable 100 further includes a ground conductor 103. The ground conductor includes a power conductor, e.g. made of copper, and a ground wire insulation 104.

The charging cable 100 further includes a cable sheath 110 disposed around the power wires. An inner surface of the cable sheath 110 is in contact with the power wires. The cable sheath 110 further includes an outer surface 111. The cable sheath 110 includes the passive radiative cooling material.

Figure 2 illustrates another exemplary embodiment of the charging cable 100. The embodiment shown in Figure 2 is similar to the embodiment illustrated in Figure 1 apart from the differences mentioned below.

The cable sheath 110 includes, at least within the sheath portion, an outer layer 112. The cable sheath 110 further includes an inner layer 113 disposed within the outer layer 112. The outer layer 112 includes the passive radiative cooling material. For example, the outer layer 112 may be provided as film or a coating or a paint which includes the passive radiative cooling material.

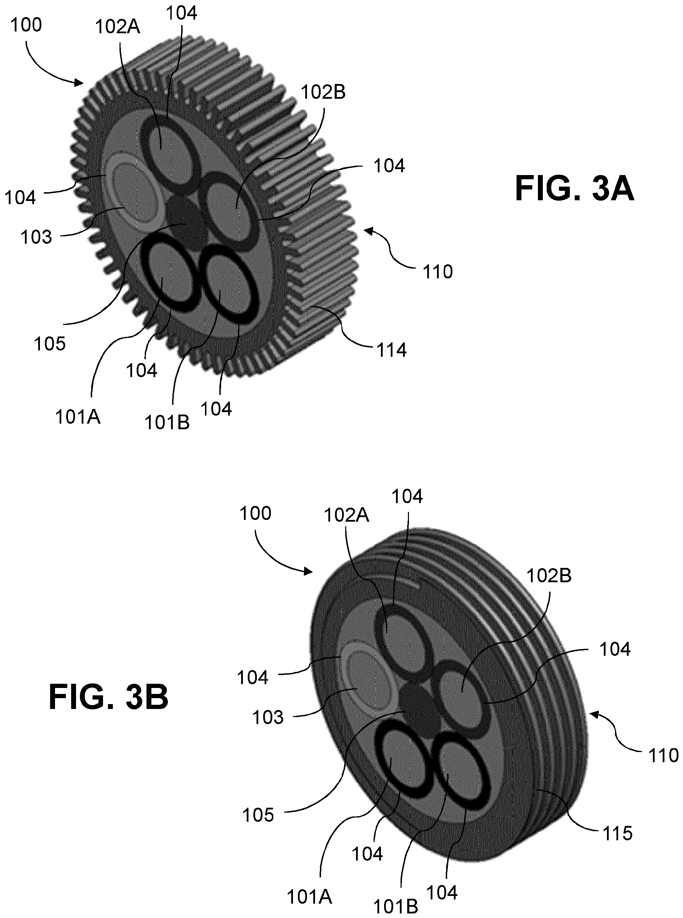

Figure 3A illustrates another exemplary embodiment of the charging cable 100. The embodiment shown in Figure 3A is similar to the embodiment illustrated in Figure 1 apart from the differences mentioned below.

The sheath portion of cable sheath 110 includes a plurality of radial fins 114. The radial fins 114 extend longitudinally. In the embodiment illustrated in Figure 3A, the radial fins 114 are straight radial fins. In other embodiments, the radial fins 114 may also have a slight curvature, or a slight annular component.

The fins 114 are integrally formed with the sheath portion of cable sheath 110. However, the fins may also extend outside of the cable portion 110, and may even extend along the entire length of charging cable.

The sheath portion having a plurality of fins is combinable with any other embodiment described herein. For example, the sheath portion may be formed of a base material including a polymer and the passive radiative cooling material. In this case the fins may also be formed of the same base material. In another embodiment, the sheath portion includes an outer layer and an inner layer, such as outer layer 112 and inner layer 113 illustrated in Figure 2. The fins may also be formed of a combination of inner and outer layers, or the fins may only be formed of an outer layer.

Figure 3B illustrates another exemplary embodiment of the charging cable 100. The embodiment shown in Figure 3B is similar to the embodiment illustrated in Figure 3A, but differs in that the sheath portion has a plurality of annular fins 115 instead of radial fins 114.

The charging cable 100 may further include filler material, such as filler material 105 illustrated in Figures 3A and 3B. Additionally, or alternatively, the charging cable 100 may include further wires or cables, e.g. such as other power wires or data cables.

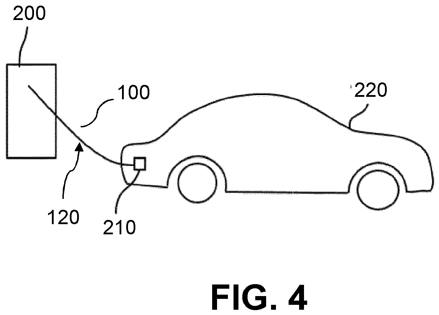

With exemplary reference to Fig. 4, an electric vehicle charging system 200 is described. The EV charging system 200 includes the charging cable 100 according to any embodiment described herein. The EV charging system 200 further includes a charging connector 210 attached to a first end of the charging cable 100. The charging connector 210 is configured to be connected to an electric vehicle 220. The cable sheath 110 of charging cable 100 further includes the sheath portion 120, which can be touched or grasped by a human hand. The EV charging system 200 may further include an EV charging station including a control unit for controlling a charging process of the electric vehicle 220. The charging cable 100 of EV charging system 200 further includes a second end connected to the EV charging station 200.

While the foregoing is directed to embodiments, other and further embodiments may be devised without departing from the basic scope, and the scope is determined by the claims that follow.

### REFERENCE NUMERALS

- 100: charging cable
- 101A, 101B: power wire for conducting positive direct current
- 102A, 102B: power wire for conducting negative direct current
- 103: ground conductor
- 104: wire insulation
- 105: filler material
- 110: cable sheath
- 111: outer surface of outer sheath
- 112: outer layer
- 113: inner layer
- 114: radial fin
- 115: annular fin
- 120: sheath portion
- 200: electric vehicle charging system
- 210: charging connector
- 220: electric vehicle

## Claims

1. Charging cable (100) for an electric vehicle comprising:
a plurality of power wires (101A, 101B, 102A, 102B) extending in an axial direction and configured for conducting direct current; and
a cable sheath (110) surrounding the plurality of power wires, the cable sheath including a sheath portion (120) touchable by a human hand, in particular graspable by a human hand;
wherein the sheath portion of the cable sheath includes a passive radiative cooling material, wherein the passive radiative cooling material has a solar radiation reflectivity of at least 0.6, preferably of at least 0.8, more preferably of at least 0.9 and most preferably of at least 0.95; and/or wherein the passive radiative cooling material has an atmospheric window emittance of at least 0.6, preferably of at least 0.8, more preferably of at least 0.9, and most preferably of at least 0.96.

2. The charging cable of claim 1, wherein the passive radiative cooling material has a radiative cooling power of at least 50 W/m², preferably at least 90 W/m², and more preferably at least 120 W/m², at an ambient temperature of at least 20°C.

3. The charging cable of any preceding claim, wherein the passive radiative cooling material includes nanoparticles, in particular wherein the nanoparticles include at least one selected from the group consisting of SiO₂ nanoparticles, TiO₂ nanoparticles, a mixture of TiO₂ and carbon black nanoparticles, a mixture of SiO₂ and TiO₂ nanoparticles, and metal oxide nanoparticles.

4. The charging cable of claim 3, wherein the passive radiative cooling material has a nanoparticle size in the range of 100 to 500 nm.

5. The charging cable of any one of claims 1 to 2, wherein the passive radiative cooling material includes photonic crystals, for example the photonic crystal being a structure of periodic array of α-quartz bars, or the photonic crystal being a structure comprising two layers of quartz and SiC.

6. The charging cable of any preceding claim, wherein the sheath portion comprises an outer layer (112) including the passive radiative cooling material.

7. The charging cable of claim 6, wherein the outer layer is provided as a film wrapped around an inner layer (113) of the sheath portion; or wherein the outer layer is provided as a coating or paint on the inner layer (113) of the sheath portion.

8. The charging cable of claim 6 or 7, wherein the outer layer further includes the passive radiative cooling material embedded in a polymeric matrix.

9. The charging cable of claim 8, wherein the polymeric matrix contains pores, preferably having a pore size in the range of 50-150 µm.

10. The charging cable of any one of claims 1 to 5, wherein the sheath portion is formed of a material including a polymer and the passive radiative cooling material.

11. The charging cable of any preceding claim, wherein the sheath portion of the cable sheath includes a plurality of fins (114, 115) projecting radially outward.

12. The charging cable of claim 11, wherein the plurality of fins are provided as annular fins (115); or wherein the plurality of fins are provided as radial fins (114), in particular as straight radial fins or as curved radial fins.

13. The charging cable of any preceding claim, wherein the cable sheath has a L* value of ≥ 50, particularly ≥ 60, more particularly ≥ 70, such as ≥ 80 or such as ≥ 90, according to the CIE L*a*b* system.

14. The charging cable of any preceding claim, wherein the cable sheath has a reflective surface.

15. Electric vehicle charging system (200) comprising the charging cable (100) of any preceding claim, a charging connector (210) attached to an end of the charging cable and configured for being connected to the electric vehicle (220), and a handle attached to the cable sheath, the handle being spaced apart from the charging connector.
